# EUROPEAN PATENT APPLICATION

(11) **EP 0 605 213 A1**
(43) Date of publication of application: **06.07.1994**
(21) Application number: 93310490.3
(22) Date of filing: 23.12.1993
(51) Int. Cl.: B32B 27/04, B29C 67/14

(54) **Fiber-reinforced resin molded articles and production process thereof**

(30) Priority: 28.12.1992 JP 348700/92
(71) Applicant: MITSUI TOATSU CHEMICALS, Inc., Chiyoda-Ku Tokyo 100 (JP)
(72) Inventor: Sakai, Hideo, Ebina-shi, Kanagawa-ken 243-04 (JP); Motai, Kojiro, Ayase-shi, Kanagawa-ken 252 (JP); Kishi, Satoru, Yokohama-shi, Kanagawa-ken 244 (JP); Morita, Katsuyuki, Kamakura-shi, Kanagawa-ken 247 (JP); Tanabe, Hiroshi, Kamakura-shi, Kanagawa-ken 247 (JP)
(74) Representative: Nicholls, Kathryn Margaret

(57) **Abstract**

A fiber-reinforced resin molded article comprises a surface material and a core material including a thermoplastic resin blended with fibers in a range of not less than 40% and not more than 80% in volume content. The core material is laminated and molded with a surface material.

Also disclosed is a method of producing fiber-reinforced resin molded articles wherein a material sheet of a core material - eg a protective layer comprising a thermoplastic resin blended with fibers in a range of not less than 40% and not more than 80% in volume content is heated to not less than a melting temperature or glass transition point of the thermoplastic resin, overlaid with a surface material made of a synthetic resin, and pressurized and shaped using a molding mold.

## Description

The present invention relates to a fiber-reinforced resin molded article, in particular such a fiber-reinforced resin molded article that is suitable for interior decoration materials for vehicles, box-shaped containers utilized as articles for industrial or daily use and the like, and a production method thereof.

In recent years, improvement in comfortableness of various vehicles represented by automobiles has become an important problem, and reduction in their fuel consumption cost and recycling of vehicle parts upon disuse of vehicles have also become important.

Thus, the interior decoration materials are also required to be of a light weight capable of contributing to improvement in comfortableness or inhabitability, safety and economy.

In the meantime, the interior decoration material widely used in the prior art has been produced through steps in which wood powder such as sawdust or the like is kneaded with a thermosetting resin and molded into one to be used as a core material to which a surface material molded with another mold is affixed, and further end portions of the core material are wrapped with the surface material to make gluing and the like.

In this method, there have been such problems that the production steps are complicated and require large production costs and large amounts of raw materials are necessary and resulted products have heavy weights, and there has been also such a problem that it is difficult to recycle their constitution materials upon disuse of vehicles.

In addition, a large amount of box-shaped containers are consumed for industries and for daily life of citizens.

Most of them are corrugated board boxes used for storage and transport of merchandise goods, however, they do not necessarily have enough strength, so that a large amount of packing matters are required between the box and the content depending upon merchandise goods to be accommodated, and hence there is such a problem that the box becomes to have a large shape, and the distribution cost becomes expensive.

In addition, such corrugated board boxes are disposable, which are discarded as waste materials in a large amount, so that it is said that resources are wasted, and their raw materials are forest resources, so that such a problem is also pointed out that destruction of the environment is caused.

Therefore, it is desirable to provide a box-shaped container which is tough and has durability, can be recovered by folding or the like, and can be used repeatedly as a continuable box.

In addition, in the fields of daily life of citizens and family life, a large amount of plastic products are used as a casing for accommodation containers, miscellaneous goods for daily use, office supplies, OA instruments and the like, however, there is such a problem that the most of them are made of plastics, so that the appearance is monotonous, being poor in beauty. Among these plastic products, there are also those to which various decoration materials such as cloth and the like are affixed, however, there is such a problem that their production requires a lot of human hands, as well as there is such a problem that the affixed decoration materials are apt to be peeled off.

The present invention has been made to ameliorate the aforesaid problems. Embodiments of the invention desirably provide a fiber-reinforced resin molded article which is stronger than those in the prior art and which can be made with a smaller amount of raw materials. Preferably the rigidity of the resin moulded article is large, and products having high qualities can be supplied inexpensively in a large amount; corrosion resistance and weather-ability may be excellent, and recycling may be possible. In a second aspect the invention provides a production method of said article.

According to a first aspect of the invention there is provided a fiber-reinforced resin molded article which may be formed by composite formation of a surface material and a core material comprising a thermoplastic resin blended with fiber in a range of not less than 40% and not more than 80% in volume content, followed by molding.

According to a second aspect of the invention there is provided a method in which a material sheet of a core material (eg a protective layer) comprising a thermoplastic resin blended with fibers in a range of not less than 40% and not more than 80% in volume content is heated to not less than a melting temperature (eg glass transition temperature) of the thermoplastic resin, and overlaid with a surface material, followed by pressurizing and shaping using a molding mold.

Embodiments of the invention are described below by way of example only and with reference to the accompanying drawings of which:

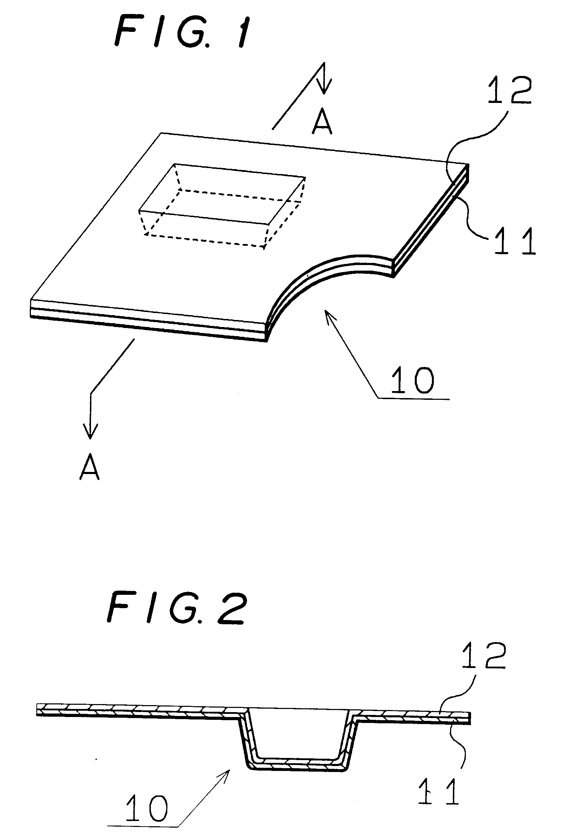

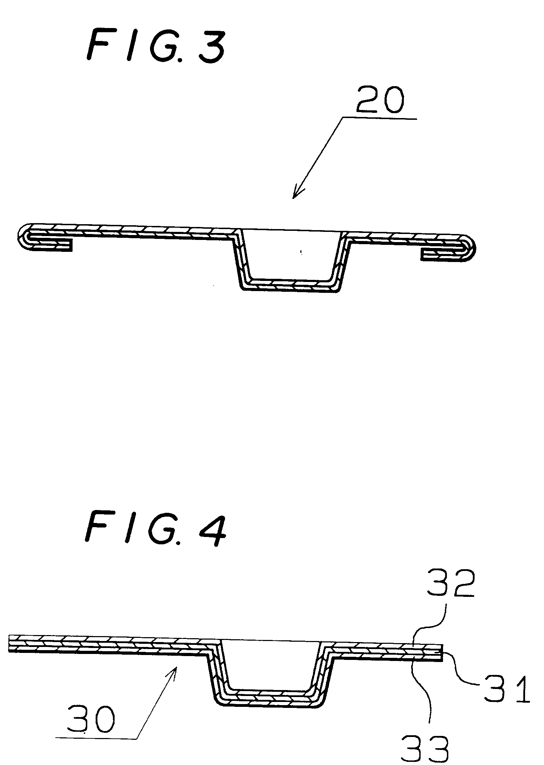

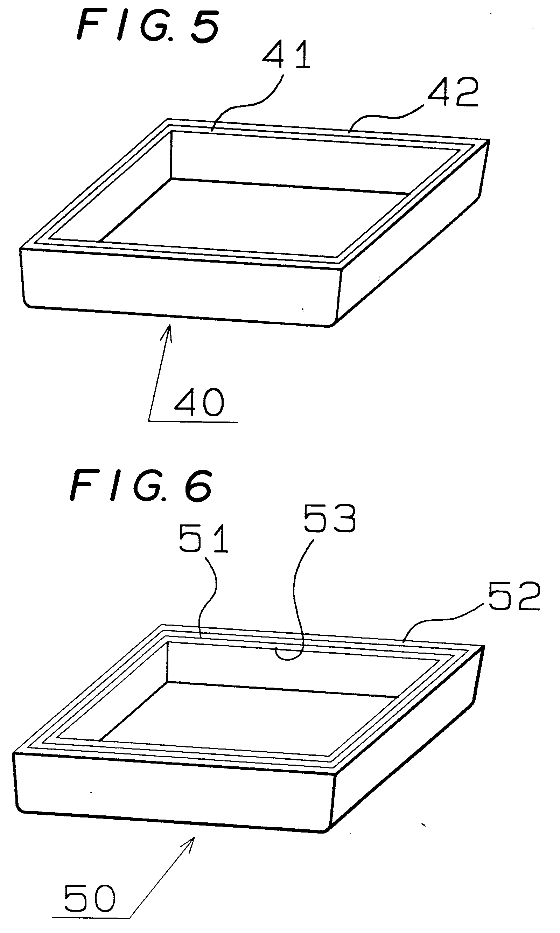

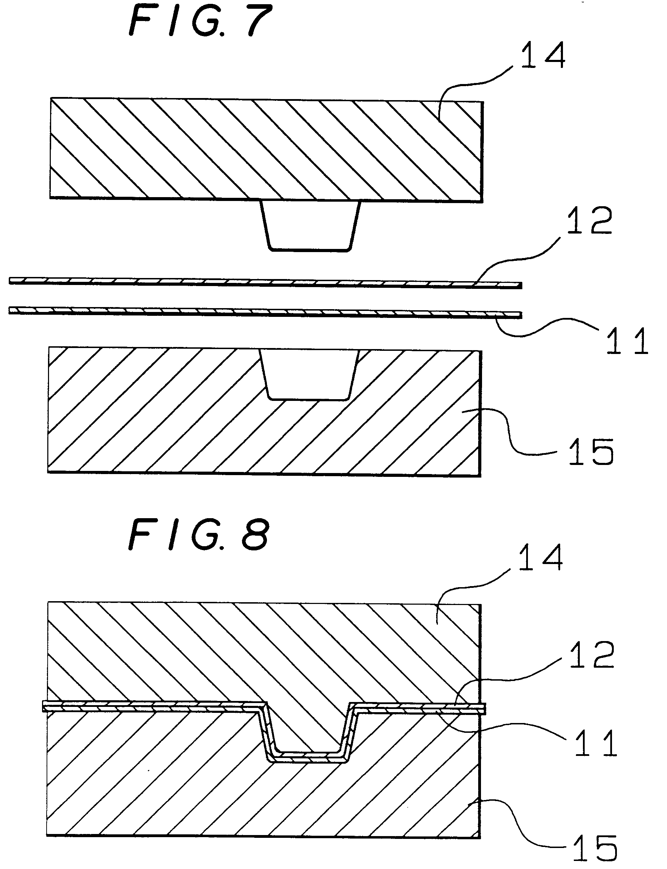

Fig. 1 is a perspective view showing one example of a fiber-reinforced resin molded article according to the present invention produced as an interior decoration material for automobiles, Fig. 2 is a cross-sectional view taken along A-A of the interior decoration material shown in Fig. 1, Fig. 3 is a cross-sectional view showing constitution of an interior decoration material formed by folding end portions of the molded article shown in Figs. 1 and 2, Fig. 4 is a cross-sectional view showing another example of an interior decoration material for automobiles, Fig. 5 is a perspective view showing one example of a fiber-reinforced resin molded article according to the present invention produced as a box-shaped container, Fig. 6 is a perspective view showing another example of a box-shaped container, Figs. 7 and 8 are explanatory views showing a method of producing the interior decoration material shown in Fig. 1, and Figs. 9 and 10 are partially enlarged cross-sectional views showing detailed constitution of the molded fiber-reinforced resin molded article.

Referring to the accompanying drawings, a fiber-reinforced resin molded article 10 shown in Figs. 1 and 2 is produced as an interior decoration material for automobiles, which is formed by integrally joined and molded a surface material 12 and a core material 11 comprising a thermoplastic resin blended with fibers in a range of not less than 40 % and not more than 80 % in volume.

Incidentally, an unattractive appearance is given in such a state because end portions of the core material 11 and the surface material 12 are exposed, however, if there is inconvenience in use, as an interior decoration material 20 shown in Fig. 3, by applying folding processing at the end portions, or by using a surface material having an area larger than that of the core material to wrap the core material with an extra portion at its circumference, the interior decoration material which is beautiful up to the end portions can be produced.

An interior decoration material 30 shown in Fig. 4 is formed by overlaying surface materials 32, 33 onto the front and the back of a core material 31 similar to the above so as to make integral joining and molding.

In Figs. 5 and 6 are shown fiber-reinforced resin molded articles molded as box-shaped containers.

One shown in Fig. 5 is a box-shaped container 40 formed by joining a surface material 42 onto the outer side of a core material 41, and one shown in Fig. 6 is a box-shaped container 50 formed by joining surface materials 52, 53 onto both inner and outer sides of a core material 51, respectively.

As the use of these molded articles, for example, there are trays used for accessory cases, boxes and saucers for kitchens in the case of those having small sizes, and for example, there are exemplified by pallets for managing materials used in factories and the like in the case of those having large sizes.

A method of producing these fiber-reinforced resin molded articles will be explained hereinafter.

These fiber-reinforced resin molded articles are produced such that the material sheet 11 of the core material comprising fibers and a thermoplastic resin is heated to not less than a melting temperature of the thermoplastic resin, which is overlaid with the surface material sheet 12 made of a synthetic resin at a high temperature, to be interposed between press molding molds 14, 15 as shown in Figs. 7 and 8 so as to perform pressing, shaping and if necessary applying folding processing at circumferential edge portions.

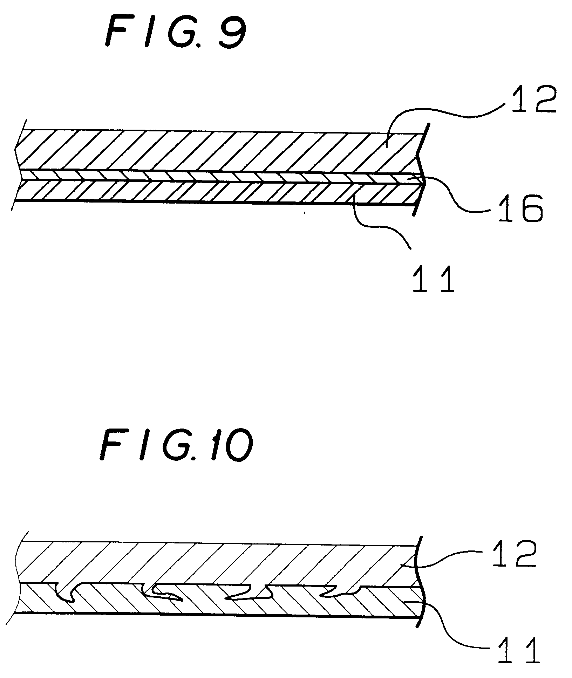

At this time, where the material of the surface material 12 is such one which melts due to heat, when the core material sheet at a high temperature contacts with the surface of the surface material 12 comprising the synthetic resin, its melted layer 16 serves as an adhesive as shown in Fig. 9, and the core material 11 is tightly joined to the surface material 12.

On the other hand, when the material of the surface material 12 is such one which does not melt due to heat, as shown in Fig. 10, the both are strongly joined owing to an anchor effect by means of irregularity on their surfaces.

The thermoplastic resin heated to not less than the melting temperature generally becomes to be in a state capable of melting and fluidizing, however, in the case of a composite material containing fibers by not less than 40 % in volume ratio, the resin is held in the lattice of fibers in a state incapable of free fluidization, and thus when a pressure for shaping is applied in such a state, the whole shape is determined in a stable form using the fibers as a framework, so that a molded article having high accuracy can be obtained.

Next, materials and the like for each of constitution elements will be explained.

There is no special limitation for the thermoplastic resin for constituting the core material 11, and for example, polystyrene, polyvinyl chloride, high density polyethylene, polypropylene, polycarbonate, polybutylene terephthalate, polyethylene terephthalate, polyethersulfone, polysulfone, polyetherimide (trade mark: ULTEM), polyether etherketone, polyphenylene sulfide and the like can be used, however, from viewpoints of strength, wear resistance, price, easiness of recycling when it becomes a waste matter and the like, polypropylene type resins are recommended as the most desirable resin.

It is desirable that the material resins of the surface material 12 and the core material 11 are resins of the same type.

The fibers to be blended into the material of the core material 11 may be exemplified by synthetic resin fibers such as aramid fiber (registered trade mark "Kevler") and the like, natural organic fibers, metallic fibers such as titanium, boron, stainless steel and the like, and inorganic fibers such as glass, carbon, silicon carbide and the like. However, there is necessarily no limitation thereto, and any one which has sufficient strength and can be obtained cheaply in a large amount may be utilized.

Furthermore, in addition to these fibers, wire mesh or the like is sometimes used.

With respect to the blending ratio of the fibers, if it becomes less than 40 % in volume ratio, it becomes difficult to shape the laminated article 10 because the fluidity of the resin is increased at a high temperature, as well as necessary rigidity and wear resistance are not obtained, and breakage is often caused during operation, while on the contrary, if it exceeds 80 %, the toughness decreases, as well as the molding processing becomes difficult, so that the blending ratio of the fibers is not less than 40 % and not more than 80 %, and desirably not less than 45 % and not more than 60 %.

In addition, it is recommended that the fiber is made aligned in a constant direction, that is in a direction to receive bending stress during the use.

In addition, the fiber-blended layer is occasionally made into a composite article of a layer in which the fibers are arranged in the lateral direction and a layer in which the fibers are arranged in the longitudinal direction, and it is also recommended to use the fibers formed in a plain weave.

A prepreg is preferable as a material for the core material 11.

In addition, there is no special limitation for the thickness of the core material 11, however, it is usually not less than 0.5 mm and not more than 20 mm, and one commonly used is approximately not less than 2 mm and about not more than 10 mm.

In addition, as the material for constituting the surface material 12 may be exemplified by foamed or non-foamed sheets of polypropylene, polystyrene and the like, thermoplastic resin products such as polyvinyl chloride sheets and the like, as well as those with fibers being protruded out of the surface such as woven cloth and nonwoven cloth comprising various natural plant fibers, hide and the like.

In addition, when these are sheets made of synthetic resin, it is recommended to use those which have been subjected to emboss processing at both their front and back surfaces.

With respect to the molded article according to the present invention embodiments desirably have the following properties: the core material is the strong fiber-reinforced resin, and this core material is joined, preferably integrally and strongly, to the, preferably beautiful, surface material, so that the article may have a light weight as compared with those in the prior art, whereas it may be tough, and may employ small amounts of raw materials; the surface material is desirably never peeled off; the rigidity and the shock resistance may be extremely high as a whole; the corrosion resistance and the weatherability may be excellent; a large amount of supply can preferably be made at a low price, repeated re-utilization, and recycling of the materials when discarded and the like may be possible, so that when the present invention is carried out, the raw materials and the distribution cost can be saved and reduced, and it can also contribute to reduction in waste matter, so that the present invention is useful also from a viewpoint of environmental safeguard.

The present invention will be further explained by way of a concrete example.

### [Example]

A prepreg having a width of 200 mm was produced by means of a method disclosed in an official gazette of Japanese Patent Publication No. 02-042168. The surface of glass fibers having a thickness of 13 µ was treated with γ-methacryloxy-propyltrimethoxysilane, 1800 individuals of which were bundled to provide yarn having no twisting, 80 individuals of the yarn were aligned in one direction with stretching by uniform tensile force, a resin was gotten caught around the yarn and impregnated into the yarn while stroking with a hot roll to produce the prepreg. The prepreg produced in such a manner is a prepreg having a fiber content of 45 % by volume and a thickness of 0.23 mm.

A laminated article was produced such that 8 sheets of the prepregs were piled with successively changing their fiber directions by 90 degrees. This prepreg laminated article was heated for 3 minutes in a furnace using far infrared radiation at 220°C as a heating source, and the polypropylene resin of the prepreg was melted.

Next, as shown in Fig. 7, the heated prepreg 11 was inserted into molds 14, 15 heated to 60°C, then a surface material 12 made of tricot was placed on the heated prepreg laminated article 11, the molds 14, 15 were closed to pressurize for 1 minute at a low pressure of 0.5 kg/cm² per surface area of molded article, and an interior decoration material was molded. The operation to introduce the materials into the molds was performed within 30 seconds in which the prepreg was in a melted state. The interior decoration material having a good appearance and a good touchness was obtained.

## Claims

1. A fiber-reinforced resin molded article which comprises a surface material and a core material comprising a thermoplastic resin blended with fibers in a range of not less than 40 % and not more than 80 % in volume content.

2. A fiber-reinforced resin molded article according to claim 1 wherein the surface materials are provided at both front and back faces of the core material.

3. A fiber-reinforced resin molded article according to claim 1 wherein the surface material is provided only at the front face of the core material

4. A fiber-reinforced resin molded article according to any one of claims 1 to 3 wherein it is an interior decoration material for automobiles.

5. A fiber-reinforced resin molded article according to any one of claims 1 to 3 wherein it is a box-shaped container.

6. A fiber-reinforced resin molded article according to any one of the preceding claims wherein both of the surface material and the synthetic resin for constituting the core material are of a polypropylene type resin.

7. A fiber-reinforced resin molded article according to any one of the preceding claims wherein the fibers to be blended into the core material are glass fiber.

8. A fiber-reinforced resin molded article according to any one of the preceding claims wherein the fibers to be blended into the core material are arranged in one direction.

9. A fiber-reinforced resin molded article according to any one of the preceding claims wherein the core material is a prepreg.

10. A fiber-reinforced resin molded article according to any one of the preceding claims wherein the surface material is a sheet comprising a polypropylene type resin.

11. A process of producing fiber-reinforced resin molded articles, said method comprising the steps of :
heating a material sheet of a core material comprising a thermoplastic resin blended with fibers in a range of not less than 40% and not more than 80% in volume content to not less than a melting temperature of the thermoplastic resin;
said material sheet being overlaid with a surface material; and
pressuring and shaping said material sheet using a molding mold.

12. A process of producing fiber-reinforced resin molded articles according to claim 11 wherein folding processing is applied to circumferential edge portions after the shaping.
